# EUROPÄISCHE PATENTSCHRIFT

(11) **EP 3 649 842 B1**
(45) Veröffentlichungstag und Bekanntmachung des Hinweises auf die Patenterteilung: **05.01.2022**
(21) Anmeldenummer: 18205483.3
(22) Anmeldetag: 09.11.2018
(51) Int. Cl.: A01C 5/06

(54) **ANORDNUNG FÜR EINE SÄREIHE EINER SÄMASCHINE, SÄREIHE UND SÄMASCHINE**
ASSEMBLY FOR A SOWING ROW OF A SOWING MACHINE, SOWING ROW AND SOWING MACHINE
AGENCEMENT POUR UN RANG DE SEMIS D'UN SEMOIR, RANG DE SEMIS ET SEMOIR

(43) Veröffentlichungstag der Anmeldung: 13.05.2020
(73) Patentinhaber: Kverneland A/S, 4353 Klepp Stasjon (NO)
(72) Erfinder: SCHUMACHER, Ferdinand, 59510 Lippetal-Oestinghausen (DE)
(74) Vertreter: Bittner, Thomas L.

(56) Entgegenhaltungen:
- EP-A1- 1 561 371
- EP-A1- 3 228 167
- US-A- 5 787 994
- US-B2- 7 997 218

## Beschreibung

Die Erfindung betrifft eine Anordnung für eine Säreihe einer Sämaschine, eine Säreihe sowie eine Sämaschine.

### Hintergrund

Säreihen dienen dazu, granulatartiges Material auf dem Feld auszubringen, beispielsweise Saatkörner und / oder Zusatzstoffe wie Pestizide oder Dünger. Bei der Säreihe sind zu diesem Zweck Elemente vorgesehen, mit denen auf dem Feld eine Furche hergestellt wird, in welche dann das granulatartige Material eingebracht wird. In diesem Zusammenhang kann vorgesehen sein, dass die Säreihe zum Ausbilden einer Feldfurche Schneidscheiben und einen zugeordneten Scharkeil aufweist. Diese Bauteile wirken bei der Säreihe zusammen, um eine Feldfurche für das Ausbringen des granulatartigen Materials bereitzustellen.

Bei bekannten Säreihen ist es aufwendig, die zum Herstellen der Feldfurche genutzten Bauteile zu wechseln, um so die Säreihe zum Beispiel für unterschiedliche Anwendungssituationen anzupassen, beispielsweise unterschiedliche Saatkörner.

In dem Dokument EP 1 561 371 A1 ist eine Kombination aus einer Schutzeinrichtung für eine Saatgutleitung zum Führen der Saatgutleitung durch eine Säfurche und einem Rahmenteil beschrieben, welcher an eine Sämaschine montierbar ist. Die Schutzeinrichtung weist einen Körper zum Abschirmen der Saatgutleitung und eine erste Verbindungseinrichtung zum Montieren der Schutzeinrichtung an den Rahmenteil auf. Der Rahmenteil weist eine zweite Verbindungseinrichtung auf. Es wird vorgeschlagen, die Verbindungseinrichtungen derart auszubilden, dass diese miteinander in Eingriff bringbar sind und insbesondere eine Verriegelungsverbindung darstellen, so dass sie ohne weitere Verbindungsmittel manuell zusammenfügbar bzw. verriegelbar sind.

Das Dokument EP 3 228 167 A1 offenbart ein Säschar für eine Sämaschine mit Dosierelementen von denen aus über Saatleitungen den Säscharen das auszubringende Material in einstellbaren Mengen zugeführt wird, wobei das Säschar einen Scharkörper aufweist, der mittels einer Halterung an dem Rahmen der Sämaschine befestigt ist und einen über eine Verbindungseinrichtung mit dem Scharkörper lösbar verbunden Furchenformer aufweist. Um in einfacher Weise die Verbindungseinrichtung so weiterzubilden, dass eine sichere und/oder wackelfreie Befestigung des Furchenformers an der Unterseite der Halterung gewährleistet ist, ist vorgesehen, dass die Verbindungseinrichtung zwischen der Halterung und dem Furchenformer einen konusförmigen oder keilförmigen Verbindungsbereich mit einem den Furchenformer mit der Halterung verbindenden Verbindungselement aufweist.

In dem Dokument US 5,787,994 ist eine Öffnungsanordnung für das Formen einer Furche im Boden in Vorbereitung für das Verbringen von Substanzen in den Boden offenbart. Die Öffnungsanordnung weist einen aufrechten, länglichen Schaft mit einem unteren Ende und einer unteren Montagekante, eine unterste, furchenbildende Komponente und eine Befestigungsstruktur zum Befestigen der Komponente am unteren Ende des Schaftes auf. Die Komponente enthält eine obere Montagefläche und ist so konfiguriert, dass sie an der unteren Montagekante des Schafts anliegt. Die Unterkante des Schafts umfasst ein Paar winklig angeordneter Randabschnitte, die so angeordnet sind, dass sie während der furchenbildenden Bewegung des Bauteils durch den Boden Drucklasten in verschiedenen Richtungen von der Komponente aufnehmen. Einer der Randabschnitte liegt zumindest teilweise in einer normalerweise horizontalen Ebene, um eine Aufwärtsbewegung der Komponente relativ zum Schaft zu verhindern, während der andere der Randabschnitte zumindest teilweise in einer normalerweise vertikalen Ebene liegt, um eine Rückwärtsbewegung der Komponente relativ zu dem Schaft zu verhindern. Die Befestigungsstruktur ist eingerichtet, eine Schwenk- und Translationsbewegung des Bauteils in Bezug auf die horizontale Ebene zu ermöglichen.

Das Dokument US 7,997,218 B2 betrifft ein landwirtschaftliches Gerät umfassend eine Sämaschinenreiheneinheit mit einem Arm und einer Öffnerscheibenanordnung, die drehbar am Arm der Reiheneinheit montiert ist. Eine Bodenstreifenanordnung umfasst eine Montagehalterung mit einer Montagehalterungsbasis und ersten und zweiten Halterungsarmen. Jeder der Halterungsarme hat ein vorderes Ende, das an der Halterungsbasis angebracht ist, und ein nachfolgendes hinteres Ende. Die Basis ist am Arm der Reiheneinheit vor der Öffnerscheibenbaugruppe angebracht. Jeder der Arme der Montagehalterung erstreckt sich von der Basis nach hinten entlang einer jeweiligen Seite der Scheibenanordnung. Erste und zweite flexible Bodenstreifen sind an den ersten bzw. zweiten Montagehalterungen angebracht und erstrecken sich von dort nach unten und hinten entlang jeder Seite der Scheibenanordnung.

### Zusammenfassung

Aufgabe der Erfindung ist es, eine Anordnung für eine Säreihe einer Sämaschine, eine Säreihe sowie eine Sämaschine anzugeben, die auf einfache Art und Weise für die Nutzung in unterschiedlichen Anwendungssituationen eingerichtet werden können.

Zur Lösung ist eine Anordnung für eine Säreihe einer Sämaschine nach dem unabhängigen Anspruch 1 geschaffen. Weiterhin sind eine Säreihe sowie eine Sämaschine nach nebengeordneten Ansprüchen bereitgestellt. Ausgestaltungen sind Gegenstand von abhängigen Unteransprüchen.

Nach einem Aspekt ist eine Anordnung für eine Säreihe einer Sämaschine geschaffen, die einen Rahmen sowie eine Furchenbildungseinrichtung aufweist, die an dem Rahmen angeordnet ist und Folgendes aufweist: Schneidscheiben und einen Scharkeil, welcher den Schneidscheiben zugeordnet ist. Der Scharkeil ist an dem Rahmen an einer Werkzeugaufnahme werkzeuglos wechselbar montiert.

Weiterhin sind eine Säreihe sowie eine Sämaschine mit einer solchen Anordnung geschaffen. Bei der Sämaschine können mehrere Säreihen nebeneinander an einer Tragrahmen angeordnet sein.

Die werkzeuglose Wechselbarkeit des Scharkeils ermöglicht es, die Furchenbildungseinrichtung für unterschiedliche Anwendungssituationen auf einfache Art und Weise und mit geringem Aufwand anzupassen, beispielweise die Verwendung für unterschiedliche granulare Materieleine, beispielweise unterschiedliche Saatkörner. Hierzu kann ein erster Scharkeil durch einen zweiten Scharkeil, der vom ersten Scharkeil verschieden ist, ersetzt werden. Dieses kann aufgrund der werkzeuglosen Montierbarkeit des Scharkeils an dem Rahmen mit wenig Aufwand und zeiteffizient ausgeführt werden. Es können so zum Beispiel Scharkeile mit unterschiedlich geformten Scharkeilspitzen montiert und demontiert werden.

Bei der Anordnung kann der Scharkeil zwischen den Schneidscheiben angeordnet sein, wobei die Scharkeilspitze wahlweise aus dem Bereich zwischen den einander gegenüberliegenden Schneidscheiben nach (schräg) unten herausragen kann. Bei dieser oder anderen Ausführungsformen können zwei Schneidscheiben einer V-Form (V-Stellung) entsprechend relativ zueinander angeordnet sein.

Die Scharkeilspitze kann gegenüber einem unteren Ende der Schneidscheiben zum Boden hin vorstehen.

Die Werkzeugaufnahme für den Scharkeil kann an einem Rahmenbauteil des Rahmens angeordnet sein, an welchem auch die Schneidscheiben aufgenommen oder montiert sind.

Der Scharkeil weist einen Montageabschnitt auf, welcher an der Werkzeugaufnahme angeordnet ist und an dem eine Scharkeilspitze einstückig angeformt oder als wechselbare Scharkeilspitze angeordnet ist, die vorzugsweise werkzeuglos von der Werkzeugaufnahme abnehmbar ist.

Der Scharkeil kann höhenverstellbar an der Werkzeugaufnahme angeordnet sein. Beispielsweise kann vorgesehen sein, dass der Montageabschnitt des Scharkeils in einer zugeordneten Aufnahme der Werkzeugaufnahme verschiebbar oder verlagerbar angeordnet ist. Mittels der Höhenverstellbarkeit des Scharkeils, insbesondere relative zu den Schneidscheiben, kann eine Relativverstellung des Scharkeils, insbesondere der Scharkeilspitze zu den Schneidscheiben bereitgestellt sein, um beispielsweise die im Vergleich zu dem unteren Ende der Schneidscheiben vorgesehene Tiefstellung der Scharkeilspitze einzustellen.

Die Werkzeugaufnahme weist eine zum Montieren und zum Demontieren des Scharkeils an der Werkzeugaufnahme manuell bedienbare Befestigungseinrichtung auf. Die manuell bedienbare Befestigungseinrichtung kann vom Nutzer per Hand werkzeuglos bedient werden, um den Scharkeil an der Werkzeugaufnahme zu montieren und zu demontieren.

Die Befestigungseinrichtung weist ein Befestigungselement auf, welches zwischen einer Feststellung, in welcher der Scharkeil an der Werkzeugaufnahme gesichert ist, und einer Losstellung verlagerbar ist, in welcher der Scharkeil an der Werkzeugaufnahme montierbar oder wieder von dieser lösbar ist. Das Befestigungselement kann zum Verlagern zwischen der Feststellung und der Losstellung schwenkbar sein.

An der Befestigungseinrichtung kann ein Abdeckelement angeordnet sein, welches einen Abstandsbereich zwischen den Schneidscheiben wenigstens teilweise abdeckt. Das Abdeckelement kann den Abstandsbereich zwischen den Schneidscheiben derart abdecken, dass hierdurch das Eindringen von Material, insbesondere Steinen, in den Abstandsbereich zwischen den Schneidscheiben im Wesentlichen verhindert ist, wodurch die Schneidscheiben vor Beschädigung geschützt sind. Das Abdeckelement kann zwischen verschiedenen Stellungen verlagerbar sein, beispielsweise einer oder mehreren Stellungen zum Abdecken und einer Stellung zum Nichtabdecken. Die Verstellbarkeit kann zum Beispiel mittels Verschwenken des Abdeckelements realisiert werden. In den verschiedenen Stellungen kann ein Überlappungsgrad zwischen dem Abdeckelement und dem Abstandsbereich zwischen den Schneidscheiben verschieden sein. Das Abdeckelement kann zumindest in der Abdeckstellung im Bereich einer Ebene oder benachbart hierzu angeordnet sein, die sich zwischen den äußeren Umfängen der schneidscheiben aufspannt.

Das Abdeckelement kann eine gekrümmte Form aufweisen, welche an die Krümmung der Schneidscheiben angepasst ist. Eine Krümmung des Abdeckelements kann im Wesentlichen der Krümmung der Schneidscheiben entsprechen. Zum Beispiel können im Wesentlichen gleiche Krümmungsradien vorgesehen sein.

Das Abdeckelement kann eine Keilflächenform aufweisen. Die Keilflächenform kann sich in einer Richtung zum Boden hin verjüngen. Bei dieser oder anderen Ausführungsformen kann das Abdeckelement in Bezug auf eine Fahrtrichtung im Betrieb im rückwärtigen Bereich der Schneidscheiben angeordnet sein.

Das Abdeckelement kann mit oder von dem Befestigungselement gebildet sein, welches den Abstandsbereich zwischen den Schneidscheiben zumindest in der Feststellung wenigstens teilweise abdeckt. Bei dieser Ausführungsform ist ein multifunktionales Bauteil vorgesehen, mit dem Abdeckelement und das Befestigungselement bereitgestellt oder gebildet sind, derart, dass mittels des multifunktionalen Bauteils einerseits der Scharkeil montierbar und demontierbar ist und andererseits der Abstandsbereich zwischen den Schneidscheiben zumindest teilweise abgedeckt ist. Das multifunktionale Bauteil kann beispielsweise mit einem Hebelelement gebildet sein, welches zum Montieren und zum Demontieren des Scharkeils verschwenkbar sein kann.

Zum Verstellen des Scharkeils in der Werkzeugaufnahme in verschiedene Montagestellungen, insbesondere zum Ausführen einer Höhenverstellung des Scharkeils an der Werkzeugaufnahme, können zum Beispiel mehrere Raststellungen vorgesehen sein, beispielsweise derart, dass an dem Montageabschnitt des Scharkeils mehrere Rastaufnahmen in unterschiedlicher Höhe angeordnet sind, in die ein an dem Befestigungselement der Werkzeugaufnahme gebildeter Rastvorsprung jeweils eingreifen kann, um den scharkeil an der Werkzeugaufnahme zu montieren. Ein Einführen des Rastvorsprungs, zum Beispiel einer Rastnase, in eine zugeordnete Rastaufnahme sowie das Entfernen des Rastvorsprungs hieraus können zum Beispiel mittels Schwenken des Befestigungselements ausgeführt werden.

In Verbindung mit der Säreihe und der Sämaschine können die vorangehend erläuterten Ausgestaltungen entsprechend vorgesehen sein.

### Beschreibung von Ausführunqsbeispielen

Im Folgenden werden weitere Ausführungsbeispiele unter Bezugnahme auf eine Figur erläutert.

Die einzige Figur zeigt eine Anordnung für eine Säreihe mit einem Rahmen 1, an dem ein Laufrad 2 aufgenommen ist. Das granulatartige Material, welches mit Hilfe der Säreihe auszubringen ist, gelangt durch ein Transportrohr 3 und wird dort durch eine Ausgangsöffnung 4 des Transportrohres 3 nach unten ausgebracht in eine Feldfurche, welche zuvor mittels einer Feldfurchenbildungseinrichtung 5 hergestellt wird.

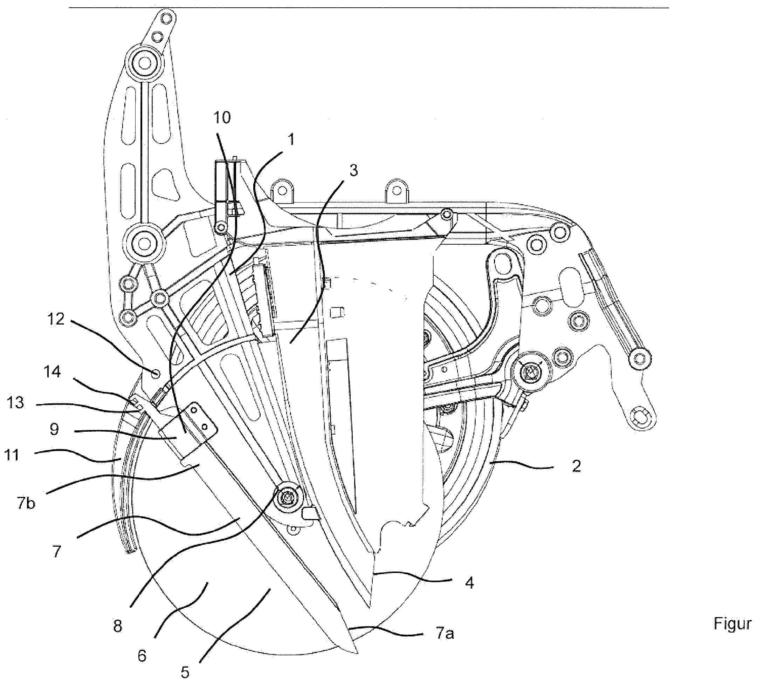

Bei der gezeigten Anordnung in Fig. 1 umfasst die Feldfurchenbildungseinrichtung 5 Schneidscheiben 6, von denen in der Figur zur Vereinfachung nur eine (hintere) Schneidscheibe gezeigt ist, sowie einen Scharkeil 7 mit einer Scharkeilspitze 7a und einem Montageabschnitt 7b, an dem die Scharkeilspitze 7a bei der gezeigten Ausführungsform einstückig angeformt ist. Die Schneidscheiben 6 können relativ zueinander einer V-Anordnung entsprechend angeordnet sein. Beim Herstellen der Furche auf dem Boden verlagern die Schneidscheiben 6 Erdmaterial zur Seite. Im mittleren Bereich wirkt dann die Scharkeilspitze 7a, zum Beispiel zur Glättung der Furche.

Der Scharkeil 7 ist bei der gezeigten Ausführungsform zwischen den Schneidscheiben 6 angeordnet, um einen Bereich der herzustellenden Feldfurche zwischen den Schneidscheiben 6 im Boden zu bearbeiten.

Die Schneidscheiben 6 sind an dem Rahmen um einen Drehpunkt 8 drehbar gelagert.

An dem Rahmen 1 ist weiterhin eine Werkzeugaufnahme 9 für den Scharkeil 7 angeordnet. Die Werkzeugaufnahme 9 umfasst in der gezeigten Ausführungsform ein Aufnahmebauteil 10 mit einem Durchbruch, weiches an dem Rahmen 1 montiert ist und durch welches hindurch der Montageabschnitt 7b des Scharkeils 7 gesteckt ist.

Weiterhin ist bei der Werkzeugaufnahme 9 ein Befestigungselement 11 vorgesehen, welches an dem Rahmen 1 um einen Schwenkpunkt 12 schwenkbar aufgenommen ist. Das Befestigungselement 11 ist in der Figur in einer Feststellung gezeigt, in welcher der Scharkeil 7 in der Werkzeugaufnahme 9 gesichert ist, indem ein zum Befestigungselement 11 proximaler Rastvorsprung 13 an dem Befestigungselement 11 in eine Rastaufnahme 14 einrastet.

Zum werkzeuglosen Lösen des Scharkeils 7 aus der Werkzeugaufnahme 9 wird das Befestigungselement 11 nach oben geschwenkt (nicht dargestellt), wodurch der Rastvorsprung 13 freigegeben wird. Der Scharkeil 7 kann dann nach unten aus dem Aufnahmebauteil 10 herausgezogen werden. In vergleichbarer Weise kann dann ein neuer Scharkeil montiert werden.

Aufgrund seiner bei dem gezeigten Beispiel gewählten Anordnung des Befestigungselementes 11, deckt dieses einen Abstandsbereich zwischen den schneidscheiben 6 ab und verhindert so, dass Steine oder anderes Bodenmaterial zwischen die Schneidscheiben 6 gelangt und diese so beschädigen kann. Aufgrund der V-Anordnung der Schneidscheiben 6 kann zur optimierten Abdeckung das Befestigungselement 11, welches so auch ein Abdeckelementbildet, quer zur Arbeitsrichtung im Betrieb (quer zur Fläche der Schneidscheiben 6) eine Keilflächenform aufweisen, die sich zum Boden hin verjüngt.

Die in der vorstehenden Beschreibung, den Ansprüchen sowie der Figur offenbarten Merkmale können sowohl einzeln als auch in beliebiger Kombination für die Verwirklichung der verschiedenen Ausführungen von Bedeutung sein.

## Patentansprüche

1. Anordnung für eine Säreihe einer Sämaschine, mit
- einem Rahmen (1) und
- einer Furchenbildungseinrichtung, die an dem Rahmen (1) angeordnet ist und Folgendes aufweist:
- Schneidscheiben (6) und
- einen Scharkeil (7), welcher
- den Schneidscheiben (6) zugeordnet ist,
- an dem Rahmen an einer Werkzeugaufnahme (9) werkzeuglos wechselbar montiert ist und
- einen Montageabschnitt (7b) aufweist, welcher an der Werkzeugaufnahme (9) angeordnet ist, wobei eine Scharkeilspitze (7a) an dem Montageabschnitt (7b) einstückig angeformt oder wechselbar angeordnet ist;
**dadurch gekennzeichnet, dass** die Werkzeugaufnahme (9) eine zum Montieren und zum Demontieren des Scharkeils (7) an der Werkzeugaufnahme (9) manuell bedienbare Befestigungseinrichtung mit einem Befestigungselement (11) aufweist, welches zwischen einer Feststellung, in welcher der Scharkeil (7) an der Werkzeugaufnahme (9) gesichert ist, und einer Losstellung verlagerbar ist, in welcher der Scharkeil (7) an der Werkzeugaufnahme (9) montierbar oder von dieser lösbar ist.

2. Anordnung nach Anspruch 1, **dadurch gekennzeichnet, dass** der Scharkeil (7) höhenverstellbar an der Werkzeugaufnahme (9) angeordnet ist.

3. Anordnung nach Anspruch 1 oder 2, **dadurch gekennzeichnet, dass** an der Befestigungseinrichtung ein Abdeckelement angeordnet ist, welches einen Abstandsbereich zwischen den Schneidscheiben (6) wenigstens teilweise abdeckt.

4. Anordnung nach Anspruch 3, **dadurch gekennzeichnet, dass** das Abdeckelement eine gekrümmte Form aufweist, welche an die Krümmung der Schneidscheiben (6) angepasst ist.

5. Anordnung nach Anspruch 3 oder 4, **dadurch gekennzeichnet, dass** das Abdeckelement eine Keilflächenform aufweist.

6. Anordnung nach mindestens einem der vorangehenden Ansprüche, soweit rückbezogen auf Anspruch 3, **dadurch gekennzeichnet, dass** das Abdeckelement mit dem Befestigungselement (11) gebildet ist, welches den Abstandsbereich zwischen den Schneidscheiben (6) zumindest in der Feststellung wenigstens teilweise abdeckt.

7. Säreihe für eine Sämaschine, mit einer Anordnung nach mindestens einem der vorangehenden Ansprüche.

8. Sämaschine, mit mindestens einer Säreihe nach Anspruch 7.

## Claims

1. An arrangement for a drill row of a seeder, having
- a frame (1) and
- a furrowing device arranged on the frame (1), comprising:
- disc blades (6) and
- a share (7), which
- is assigned to the disc blades (6),
- is mounted on the frame on a tool holder (9) such that it can be exchanged without tools, and
- has a mounting portion (7b), which is arranged on the tool holder (9), wherein a share tip (7a) is arranged on the mounting portion (7b) integrally or exchangeably;
**characterized in that**
the tool holder (9) has a manually operable fastening device with a fastening element (11) for mounting and removing the share (7) on or from the tool holder (9), which fastening element (11) can be displaced between a locked position in which the share (7) is secured to the tool holder (9) and a released position in which the share (7) can be mounted on the tool holder (9) or detached from the same.

2. The arrangement according to claim 1, **characterized in that** the share (7) is arranged on the tool holder (9) in a height-adjustable manner.

3. The arrangement according to claim 1 or 2, **characterized in that** a covering element, which at least partially covers a spacing region between the disc blades (6), is arranged on the fastening device.

4. The arrangement according to claim 3, **characterized in that** the covering element has a curved shape which is adapted to the curvature of the disc blades (6).

5. The arrangement according to claim 3 or 4, **characterized in that** the covering element has a wedge shape.

6. The arrangement according to at least one of the preceding claims, insofar as dependent on claim 3, **characterized in that** the covering element is formed with the fastening element (11), which at least partially covers the spacing region between the disc blades (6) at least in the locked position.

7. A drill row for a seeer, comprising an arrangement according to at least one of the preceding claims.

8. A seeder comprising at least one drill row according to claim 7.

## Revendications

1. Ensemble, destiné à une ligne de semis d'un semoir, comprenant
- un cadre (1) et
- un système de formation de sillons, qui est placé sur le cadre (1) et qui comporte ce qui suit :
- des disques de coupe (6) et
- une clavette de soc (7), laquelle
- est associée aux disques de coupe (6),
- est montée de manière interchangeable sans outils sur le cadre, sur un porte-outil (9), et
- comporte un segment de montage (7b) qui est placé sur le porte-outil (9), une pointe de clavette de soc (7a) étant surmoulée en monobloc sur le segment de montage (7b) ou y étant placée de manière interchangeable ;
**caractérisé en ce que**
le porte-outil (9) comporte un système de fixation à actionnement manuel sur le porte-outil (9), destiné à monter et à démonter la clavette de soc (7), pourvu d'un élément de fixation (11), qui est déplaçable entre une position fixe dans laquelle la clavette de soc (7) est bloquée sur le porte-outil (9) et une position libre dans laquelle la clavette de soc (7) est susceptible d'être montée sur le porte-outil (9) ou désolidarisée de celui-ci.

2. Ensemble selon la revendication 1, **caractérisé en ce que** la clavette de soc (7) est placée de manière réglable en hauteur sur le porte-outil (9).

3. Ensemble selon la revendication 1 ou 2, **caractérisé en ce que** sur le système de fixation est placé un élément de recouvrement, qui recouvre au moins partiellement une zone d'écart entre les disques de coupe (6).

4. Ensemble selon la revendication 3, **caractérisé en ce que** l'élément de recouvrement présente une forme curviligne, qui est adaptée à la courbure des disques de coupe (6).

5. Ensemble selon la revendication 3 ou 4, **caractérisé en ce que** l'élément de recouvrement présente la forme d'une surface cunéiforme.

6. Ensemble selon au moins l'une quelconque des revendications précédentes, si elles se réfèrent à la revendication 3, **caractérisé en ce que** l'élément de recouvrement est formé avec l'élément de fixation (11) lequel recouvre au moins partiellement, au moins dans la position fixe la zone d'écart entre les disques de coupe (6).

7. Ligne de semis pour un semoir, pourvue d'un ensemble selon au moins l'une quelconque des revendications précédentes.

8. Semoir, pourvu d'au moins une ligne de semis selon la revendication 7.
